Europäisches Patentamt

European Patent Office

Office européen des brevets

(11) Veröffentlichungsnummer: **0 224 311 B1**

# (12) EUROPÄISCHE PATENTSCHRIFT

(45) Veröffentlichungstag der Patentschrift: **27.01.93**

(21) Anmeldenummer: **86202077.3**

(22) Anmeldetag: **24.11.86**

(51) Int. Cl.⁵: **H04Q 11/04**

(51) Int. Cl.⁵: **H04Q 11/04**

---

(54) **Vermittlungsanlage.**

---

(30) Priorität: **26.11.85 DE 3541662**

(43) Veröffentlichungstag der Anmeldung:
**03.06.87 Patentblatt 87/23**

(45) Bekanntmachung des Hinweises auf die
Patenterteilung:
**27.01.93 Patentblatt 93/04**

(84) Benannte Vertragsstaaten:
**DE FR GB SE**

(56) Entgegenhaltungen:
**EP-A- 0 078 634**
**EP-A- 0 116 386**

**ARCHIV FÜR ELEKTRONIK UND UBERTRA-
GUNGSTECHNIK, Band 35, Nr. 1, Januar 1981,
Seiten 7-19, Stuttgart, DE; A. LOTZE et al.:
"Verkehrsleistung und wirtschaftliche Struktur von PCM-Koppel-anordnungen in digitalen Fernsprechvermittlungsstellen"**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB SE**

(72) Erfinder: **Krüger, Johann
Alter Hof 3
W-2085 Ouickborn(DE)**
Erfinder: **Jasmer, Wolfgang
Dachsberg 13b
W-2000 Hamburg 61(DE)**

(74) Vertreter: **Poddig, Dieter, Dipl.-Ing. et al
Philips Patentverwaltung GmbH Wendenstrasse 35 Postfach 10 51 49
W-2000 Hamburg 1(DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vermittlungsanlage zur rechnergesteuerten Vermittlung von digitalen zeitverschachtelten, in zyklisch wiederholten Rahmen auf einer Anzahl Eingangsleitungen eintreffender Daten nach einer gleichen Anzahl Ausgangsleitungen über ein Koppelfeld, das

- eingangsseitig erste zyklisch parallel betätigte Umschalter, die die Eingangsdaten der Eingangsleitungen rahmenweise zyklisch über eine gleiche Anzahl Eingangs-Zwischenleitungen verteilen,
- eine an die Eingangs-Zwischenleitungen angeschlossene mittlere Stufe mit Datenspeichern, in der die zu vermittelnden Datenwege bestimmt werden und die die Daten auf einer der Anzahl Eingangs-Zwischenleitungen gleichen Anzahl Ausgangs-Zwischenleitungen abgibt, und
- ausgangsseitig zweite zyklisch parallel betätigte Umschalter aufweist, die die Daten auf den Ausgangs-Zwischenleitungen rahmenweise zyklisch über die Ausgangsleitungen verteilen, auf denen die vermittelten Daten erscheinen.

Eine derartige Vermittlungsanlage ist bekannt aus der EP-A-116 386 und der dieser entsprechenden Veröffentlichung "IEEE International Conference on Comm. 1984", Vol. 1, Seiten 299-302. Eine derartige Vermittlungsanlage verhält sich wie ein einstufiges Koppelfeld, bei dem also keine Wegesuche erforderlich ist, und es ist außerdem blockierungsfrei. Dieses bekannte Prinzip läßt sich auch für größere Anzahlen von Kanälen bzw. Eingangsleitungen anwenden. Die mittlere Stufe, d.h. die eigentliche Vermittlungsstufe, ist dabei eine Zeitschaltstufe, die für jeden Kanal einen Ein-Bit-Speicher enthält. Außer diesen Datenspeichern sind jedoch eine große Anzahl von Schaltern erforderlich, die insgesamt einen hohen Aufwand darstellen.

Aus der EP-A-78 634 ist ein Zeitmultiplex-Schaltnetzwerk bekannt, bei dem die Eingangsleitungen paarweise zusammengefaßt werden und je Eingangsleitung eine der Anzahl Paare gleiche Anzahl Speicher vorgesehen ist. Die Eingänge der Speicher jeweils eines Paares von Eingangsleitungen werden periodisch im Rahmentakt umgeschaltet, so daß aufeinanderfolgende Rahmen jeweils in verschiedenen Speichern gespeichert sind. Außerdem sind die Ausgangsleitungen paarweise zusammengefaßt, und die einzelnen Leitungen jedes Paares werden von Rahmen zu Rahmen auf die zusammengefaßten Ausgänge jeweils eines anderen Speichers aller Paare von Eingangsleitungen periodisch umgeschaltet. Auf diese Weise wird ebenfalls eine blockierungsfreie Vermittlungsanlage geschaffen, die jedoch bei einer größeren Anzahl von Eingangsleitungspaaren einen erheblichen Umschaltaufwand und eine große Speicherkapazität erfordert.

Aufgabe der Erfindung ist es daher, eine Vermittlungsanlage der eingangs genannten Art anzugeben, die in der Vermittlungsstufe weniger Aufwand erfordert und vor allem mit relativ einfachen, üblichen integrierten Schaltungen zu realisieren ist.

Diese Aufgabe wird erfindungsgemäß dadurch gelöst, daß zu jeder Kombination einer Eingangsleitung mit einer Eingangs-Zwischenleitung, die sich aus den Stellungen der eingangsseitigen Umschalter ergibt, eine gleiche Kombination von Ausgangs-Zwischenleitungen mit Ausgangsleitungen durch die ausgangsseitigen Umschalter vorhanden ist, wobei die Folge der Kombination jeweils gleich ist, daß in der mittleren Stufe je Eingangs-Zwischenleitung ein wahlfrei adressierter Datenspeicher vorgesehen ist, der eine Kapazität für die Daten aller Eingangsleitungen während jeweils eines Rahmens aufweist und der die Daten je eines anderen Rahmens jeder eingehenden Leitung aufnimmt, und daß eine Adressiervorrichtung vorgesehen ist, die alle Datenspeicher in gleicher Adressenfolge, jedoch von Datenspeicher zu Datenspeicher um einen Rahmen versetzt, zyklisch wiederholt zum verbindungsabhängigen Schreiben und/oder Lesen ansteuert.

Die Erfindung beruht auf dem Gedanken, daß innerhalb einer Rahmenperiode in einer Zeitstufe n Kanäle vermittelt werden können, wobei n die Anzahl der Kanäle einer Leitung sind. Dann können in einem Zeitintervall von r Rahmenperioden r.n Kanäle vermittelt werden. Das erfordert allerdings Zeitstufen, deren Kapazität um den Faktor r vergrößert sein müssen, d.h. es müssen r*n Speicherplätze sowohl im Datenspeicher als auch in dem dessen Adressen steuernden Steuerspeicher vorhanden sein. In einem Datenspeicher können dann also r Rahmen von einer einzigen Leitung gegen insgesamt r Rahmen von r verschiedenen Leitungen ausgetauscht werden, jedoch wird von jeder Leitung nur der r-te Rahmen vermittelt. Um alle Rahmen vermitteln zu können, sind also r Zeitstufen bzw. Datenspeicher erforderlich, die, von einem zeitlichen Versatz eingangsseitiger bzw. ausgangsseitiger Adressen abgesehen, parallel adressiert werden. Auf diese Weise ist zwar ein umfangreicherer Datenspeicher als bei der bekannten Datenvermittlungsanlage erforderlich, jedoch keinerlei Schalter in der eigentlichen Vermittlungsstufe, sondern nur die eingangsseitigen und ausgangsseitigen Umschalter.

Für die parallele Adressierung enthalten alle Steuerspeicher die gleiche Adressenfolge, so daß vom Vermittlungsrechner für jede Vermittlung nur eine für alle Steuerspeicher gleiche Adresse ermittelt werden muß, d.h. die Vermittlungsanlage verhält sich nach außen einstufig. Dazu ist es auch erforderlich, daß für jede Stellung der ausgangsseitigen, parallel betriebenen Umschalter, bei der jede Eingangsleitung jeweils mit einer bestimmten Eingangs-Zwischenleitung verbunden ist, eine Stellung der ausgangsseitigen, ebenfalls parallel betriebenen Umschalter existiert, bei der jede der jeweils zu einer Eingangs-Zwischenleitung bzw. der entsprechenden mittleren Stufe gehörende Ausgangs-Zwischenleitungen mit der der Eingangsleitung entsprechenden Ausgangsleitung verbunden ist. Dies läßt sich leicht damit klarmachen, daß es möglich sein muß, in einer 1:1-Vermittlung alle Daten auf den Eingangsleitungen in derselben Reihenfolge auf den entsprechenden Ausgangsleitungen abzugeben. Die einander zugeordnenen Stellungen der eingangsseitigen und ausgangsseitigen Umschalter werden zweckmäßig gleichzeitig eingenommen.

Wenn bei den eingangsseitigen und ausgangsseitigen Umschaltern der Aufbau bzw. die Verbindung der Eingänge mit den Anschlüssen der Umschalter selbst identisch sein soll, ist es zweckmäßig, daß in einer Stellung der eingangsseitigen und ausgangsseitigen Umschalter die Eingangsleitungen mit den Eingangs-Zwischenleitungen und gleichzeitig die Ausgangs-Zwischenleitungen mit den Ausgangsleitungen jeweils in umgekehrter Reihenfolge miteinander verbunden sind und die Verbindungen in den anderen Stellungen sich durch parallele Verschiebung der Verbindungen in der einen Stellung ergeben.

Dies bedeutet, daß in der einen Stellung z.B. die erste Eingangsleitung mit der letzten Eingangs-Zwischenleitung, die zweite Eingangsleitung mit der vorletzten Eingangs-Zwischenleitung usw. verbunden ist. Auf diese Weise ergibt sich ein besonders einfacher und übersichtlicher Aufbau.

Bei der bekannten Anordnung ist eine Adressierung der die dort den Verbindungsweg bestimmenden Schalter angegeben, die ein Schieberegister verwendet. Ein derartiges Schieberegister ist auch bei der Vermittlungsanlage nach der Erfindung für die Steuerung der Datenspeicheradressen möglich. Eine Ausgestaltung der Erfindung ist jedoch dadurch gekennzeichnet, daß die Adressiervorrichtung einen eigenen Steuerspeicher je Datenspeicher umfaßt und alle Steuerspeicher die gleiche Folge von Datenspeicheradressen enthalten. Dadurch ist die Information für die durchzuschaltenden Verbindungswege zwar mehrfach vorhanden, nämlich für jeden Datenspeicher einmal, jedoch kann dann der Datenspeicher mit dem zugehörigen Steuerspeicher, die beide mit sehr hoher Geschwindigkeit arbeiten, in einer Einheit zusammengefaßt werden. Die in die Steuerspeicher für den Aufbau einer neuen Verbindung einzuschreibende Information braucht von dem Vermittlungsrechner nur einmal für alle Steuerspeicher gemeinsam ermittelt zu werden, wobei ein Wegesuchen durch das einstufige Verhalten entfällt.

Grundsätzlich können beide Folgen der Datenspeicheradressen zum Schreiben und zum Auslesen abhängig von der durchzuschaltenden Verbindung gewählt werden, wobei der Steuerspeicher jedes Datenspeichers sowohl die Einschreibadresse als auch die Ausleseadresse enthalten muß. Eine einfachere Möglichkeit besteht gemäß einer weiteren Ausgestaltung der Erfindung darin, daß von den beiden Folgen der Datenspeicheradressen zum Einschreiben und Auslesen eine dieser Folgen unabhängig von den durchzuschaltenden Verbindungen die natürliche Adressenfolge der Datenspeicher ist und nur die andere Folge durch die durchzuschaltende Verbindung bestimmt ist. Die Bestimmung der anderen Adressenfolge für den Datenspeicher ergibt sich dann ohne weiteres in eindeutiger Weise, ohne daß deswegen eine von Null verschiedene Blockierungswahrscheinlichkeit entsteht. Für die Erzeugung der natürlichen Adressenfolge ist es besonders zweckmäßig, daß jedem Datenspeicher ein Steuerzähler zugeordnet ist, der eine der beiden Adressenfolgen liefert, und daß die Steuerzähler um jeweils eine Rahmenlänge gegeneinander versetzt zählen. Dies wird einfach dadurch erreicht, daß die Steuerzähler alle denselben Zähltakt erhalten, jedoch von verschiedenen Anfangsstellungen bzw. zu verschiedenen Anfangszeiten zu zählen beginnen.

Die Adressierung der Steuerspeicher kann auf verschiedene Weise erfolgen. Da für die zyklische Steuerung der eingangsseitigen und ausgangsseitigen Umschalter am einfachsten ein gemeinsamer Zähler verwendet wird, ist es nach einer weiteren Ausgestaltung der Erfindung zweckmäßig, daß alle Steuerspeicher gemeinsam von einem Adressengenerator gesteuert sind und die gleiche Folge von Datenspeicheradressen, jeweils um einen Rahmen versetzt, enthalten. Dieser Adressengenerator ist dann der gemeinsame Zähler zur Steuerung der Umschalter. Die in die Steuerspeicher für den Aufbau einer neuen Verbindung einzuschreibende Information kann durch entsprechende Adressenumschaltung in alle Steuerspeicher gleichzeitig eingeschrieben werden, oder sie wird allen Steuerspeichern zugeführt und erst dann darin eingeschrieben, wenn die für den jeweiligen Steuerspeicher gültige Adresse gerade erzeugt wird, wobei für jeden Steuerspeicher ein Adressenvergleicher erforderlich ist.

Nach einer anderen Ausgestaltung der Erfindung ist es zweckmäßig, daß jeder Steuerspeicher von dem zugehörigen Steuerzähler adressiert wird und alle Steuerspeicher die gleiche Folge von Datenspeicheradressen an denselben Steuerspeicheradressen enthalten. Dabei ergibt sich die Verschiebung bei der Adressierung der Datenspeicher über die entsprechende versetzte Adressierung der Steuerspeicher mittels der versetzt zählenden Steuerzähler. Die Information, d.h. die Datenspeicheradresse für den Aufbau einer neuen Verbindung wird in diesem Falle in alle Steuerspeicher an derselben Steuerspeicheradresse gleichzeitig eingeschrieben.

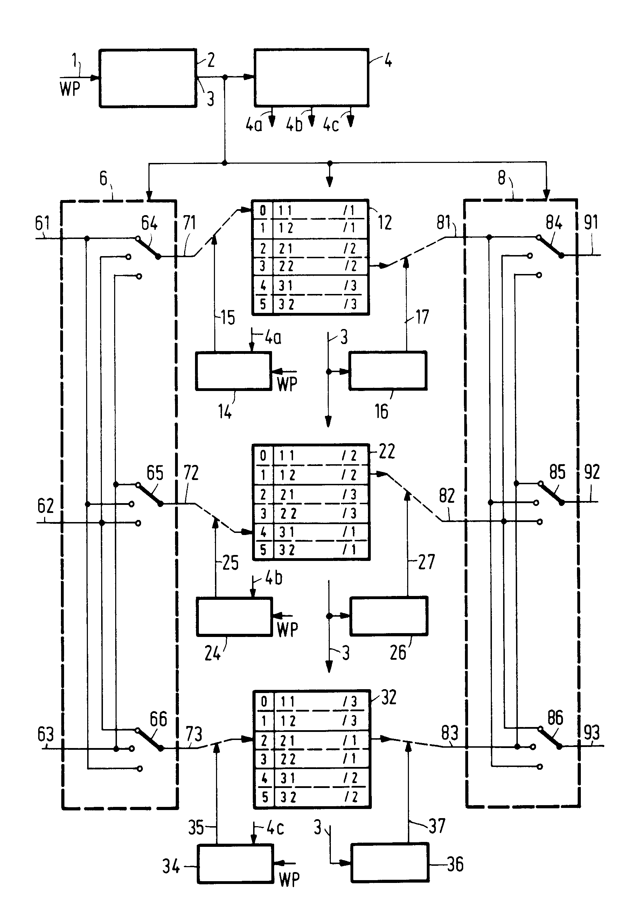

Ein Ausführungsbeispiel der Erfindung wird nachstehend anhand der Zeichnung erläutert, die ein Blockschaltbild der Erfindung für einen vereinfachten Fall mit drei Eingangsleitungen und drei Ausgangsleitungen zeigt, von denen jede zwei Kanäle führt. Es ist daraus jedoch ohne weiteres zu erkennen, daß das gleiche Prinzip für eine größere Anzahl von Leitungen mit einer größeren Anzahl von Kanälen ebenso gilt.

Die Eingangsleitungen sind mit 61, 62 und 63 bezeichnet, und es sei angenommen, daß die Daten bitseriell zugeführt werden, d.h. jeder Kanal pro Leitung wird durch eine zusammenhängende Folge von z.B. 8 Bit dargestellt, die auch als Wort bezeichnet werden. Jeweils n Kanäle bzw. Worte (im vorliegenden Beispiel ist n = 2) bilden in üblicher Weise einen Multiplexrahmen. Mittels nicht dargestellter bekannter Elemente sind die Multiplexrahmen auf den lokalen Rahmentakt der Vermittlungsanlage synchronisiert und damit untereinander phasengleich.

Die drei Eingangsleitungen 61, 62 und 63 führen auf eine eingangsseitige Umschaltanordnung 6, die für jede Eingangsleitung einen Umschalter 64, 65 und 66 mit je drei Stellungen entsprechend den drei Eingangsleitungen enthält. Die Ausgänge der Umschalter 64, 65 und 66 führen als Eingangs-Zwischenleitungen 71, 72 und 73 aus der Umschaltanordnung 6 heraus. Alle drei Umschalter 64, 65 und 66 werden parallel weitergeschaltet und verbinden dadurch die drei Eingangsleitungen 61, 62 und 63 in zyklischer Folge mit den Eingangs-Zwischenleitungen 71, 72 und 73, d.h. in der einen Stellung ist die Eingangsleitung 61 mit der Eingangs-Zwischenleitung 71, die Eingangsleitung 62 mit der Eingangs-Zwischenleitung 73 usw. verbunden, in der nächsten Stellung ist die Eingangsleitung 61 mit der Eingangs-Zwischenleitung 72, die Eingangsleitung 62 mit der Eingangs-Zwischenleitung 71 usw. verbunden. Es ergibt sich also die in der nachstehenden Tabelle 1 angegebene Folge von Verbindungen

$$\textbf{T A B E L L E} \quad \textbf{1}$$

| | | | |
|---|---|---|---|
| 61 | 71 | 72 | 73 |
| 62 | 73 | 71 | 72 |
| 63 | 72 | 73 | 71 |

In der letzten Stellung der Umschalter 64, 65 und 66 sind also die Eingangsleitungen 61, 62 und 63 mit der umgekehrten Reihenfolge der Eingangs-Zwischenleitungen 71, 72 und 73 verbunden.

Die Umschalter 64, 65 und 66 werden über den Ausgang 3 eines Zählers 2 gesteuert, der am Zähleingang 1 mit Beginn jedes neuen Kanals bzw. Wortes auf den Eingangsleitungen 61, 62 und 63 einen Wortimpuls WP erhält. Der Zähler 2 hat eine Kapazität von im vorliegenden Fall zwei (Kanalzahl je Eingangsleitung) mal drei (Anzahl der Eingangsleitungen) = sechs Stellungen, so daß er einen vollen Zyklus in drei Rahmen, die als Überrahmen bezeichnet werden, durchführt. Mit jedem neuen Rahmen werden die Umschalter 64, 65 und 66 um eine Stellung weitergeschaltet, so daß sie nach einem Überrahmen ihre ursprüngliche Stellung wieder erreicht haben.

Jede der Eingangs-Zwischenleitung 71, 72 und 73 führt auf den Dateneingang eines zugeordneten Datenspeichers 12, 22 und 32 mit einer Anzahl Speicheradressen für jeweils ein Wort, wobei die Adressen in diesen Datenspeichern in der linken Spalte angegeben sind. Die Adressierung des Datenspeichers 12 ist durch die gestrichelte Verbindung zur Eingangs-Zwischenleitung 71 und die Steuerverbindung 15 symbolisch angedeutet, die von einem Steuerzähler 14 kommt, der die Wortimpulse WP zählt. Außerdem wird der Steuerzähler 14 auf seine Anfangsstellung über eine Leitung 4a zurückgestellt, die von einem Dekodierer 4 kommt, der ebenfalls an die Ausgänge 3 des Zählers 2 angeschlossen ist und der jeweils bei Beginn eines neuen Rahmens am Ausgang 4a, 4b oder 4c ein Signal abgibt. Insbesondere wird das Signal am Ausgang 4a vor bzw. mit Beginn des ersten Rahmens eines Überrahmens abgegeben. Damit wird an der Adresse 0 des Datenspeichers 12 das Datenwort der ersten Eingangsleitung des ersten Kanals des ersten Rahmens eines Überrahmens eingeschrieben, wie durch die Zahlen neben der Adresse 0 in diesem Datenspeicher 12 angegeben ist. Nach dem nächsten Wortimpuls hat der Steuerzähler 14 um eine Stellung weitergezählt und steuert über seine Verbindung 15 die Adresse 1 des Datenzählers 12 an, in die von der ersten Eingangsleitung 61 der zweite Kanal des ersten Rahmens eingeschrieben wird.

Mit dem nächsten Wortimpuls wird der Steuerzähler 14 wieder eine Stellung weitergeschaltet, aber außerdem sind nun die Umschalter 64, 65 und 66 in die mittlere Stellung geschaltet, so daß an der Adresse 2 des Datenspeichers 12 das Datenwort der zweiten Eingangsleitung 62 aus dem ersten Kanal des zweiten Rahmens eingeschrieben wird. In dieser Weise wird in den Datenspeicher 12 weiter eingeschrieben, so daß am Ende eines Überrahmens die durch die Zahlen angedeuteten Worte eingeschrieben sind. Mit Beginn des nächsten Überrahmens werden die im Datenspeicher 12 enthaltenen Informationen jeweils überschrieben.

In entsprechender Weise wird der Datenspeicher 22 von einem Steuerzähler 24 zum Einschreiben der auf der Eingangs-Zwischenleitung 72 vorhandenen Worte über die Verbindung 25 adressiert. Dieser Steuerzähler 24 schaltet ebenfalls mit jedem Wortimpuls WP um eine Stellung weiter, wird jedoch mit Beginn des zweiten Rahmens eines Überrahmens über den Eingang 4b auf seine Anfangsstellung gesetzt, so daß er am Beginn eines neuen Überrahmens über die Verbindung 25 die Adresse 4 des Datenspeichers 22 ansteuert, wie in der Figur angedeutet ist. Da der Umschalter 65 zu Beginn jedes Überrahmens die dritte Eingangsleitung 63 mit der Eingangs-Zwischenleitung 72 verbindet, wird in diese Adresse 4 aus der dritten Eingangsleitung das Wort des ersten Kanals des ersten Rahmens eingeschrieben. Darauffolgend wird in entsprechender Weise wie beim Datenspeicher 12 der Datenspeicher 22 mit den Worten der Eingangsleitungen beschrieben, so daß schließlich ebenso wie beim Datenspeicher 12 der Datenspeicher 22 jeweils ein Wort jedes Kanals jeder Eingangsleitung enthält, jedoch aus einem anderen Rahmen wie der Datenspeicher 12, wie aus einem Vergleich der an den Adressen angegebenen Zahlen zu erkennen ist. Auch die Ordnung der Worte bezüglich der Eingangsleitungen und der Kanäle darauf ist identisch mit der des Datenspeichers 12.

Auch der Datenspeicher 32 wird zum Einschreiben von einem Steuerzähler 34 über die Verbindung 35 gesteuert, wobei dieser Steuerzähler 34 zu Beginn des dritten Rahmens über die Leitung 4c auf seine Anfangsstellung zurückgesetzt worden war. Dadurch adressiert der Steuerzähler 34 zu Beginn eines neuen Überrahmens über die Verbindung 35 die Adresse 2 des Datenspeichers 32, wie in der Figur angedeutet ist, und schreibt darin von der zweiten Eingangsleitung 62 das Wort des ersten Kanals des ersten Rahmens ein. Am Ende eines Überrahmens enthält der Datenspeicher 32 ebenfalls ein Wort jedes Kanals jeder Eingangsleitung, jedoch von einem anderen Rahmen als die anderen beiden Datenspeicher 12 und 22. Auf diese Weise sind in allen drei Datenspeichern 12, 22 und 32 die Worte aller drei Eingangsleitungen 61, 62 und 63 während eines Überrahmens aus drei aufeinanderfolgenden Rahmen gespeichert.

Beim Auslesen der Datenspeicher 12, 22 und 32 erfolgt die Adressierung nun über Steuerspeicher, nämlich beim Datenspeicher 12 über den Steuerspeicher 16 und die Verbindung 17, beim Datenspeicher 22 über den Steuerspeicher 26 und die Verbindung 27 und beim Datenspeicher 32 über den Steuerspeicher 36 und die Verbindung 37. Diese Steuerspeicher 16, 26 und 36 werden in dem hier dargestellten Beispiel ebenfalls über den Ausgang 3 des Zählers 2 adressiert. Der Inhalt der Steuerspeicher wird später erläutert.

Die Datenausgänge der Datenspeicher 12, 22 und 32 führen nun auf je eine Zwischen-Ausgangsleitung 81, 82 bzw. 83, die Eingänge einer Umschaltanordnung 8 darstellen, die in völlig gleicher Weise wie die Umschaltanordnung 6 aufgebaut ist, nämlich mit drei Umschaltern 84, 85 und 86, die in gleicher Weise wie bei der Umschaltanordnung 6 über den Ausgang 3 des Zählers 2 gesteuert werden und beispielsweise die Ausgangs-Zwischenleitung 81 nacheinander mit der Ausgangsleitung 91, danach mit der Ausgangsleitung 93 und dann mit der Ausgangsleitung 92 verbinden, und entsprechend auch für die anderen Ausgangs-Zwischenleitungen 82 und 83. Es ergibt sich damit die gleiche Folge von Verbindungen wie bei der Umschaltanordnung 6.

Die Erläuterung der Durchschaltung der einzelnen Verbindungen wird anhand der nachstehenden Tabelle 2 vorgenommen.

# EP 0 224 311 B1

## Tabelle 2

| Adr. 3 | Adr. 12 | geschalt. Verbindg. | | Adr. 22 | geschalt. Verbindg. | | Adr. 32 | geschalt. Verbindg. | |
|---|---|---|---|---|---|---|---|---|---|
| 0 | 3 | 22/2 | 11/4 | 1 | 12/2 | 31/4 | 2 | 21/1 | 21/4 |
| 1 | 4 | 31/3 | 12/4 | 0 | 11/2 | 32/4 | 5 | 32/2 | 22/4 |
| 2 | 2 | 21/2 | 21/5 | 3 | 22/3 | 11/5 | 1 | 12/3 | 31/5 |
| 3 | 5 | 32/3 | 22/5 | 4 | 31/4 | 12/5 | 0 | 11/3 | 32/5 |
| 4 | 1 | 12/4 | 31/6 | 2 | 21/3 | 21/6 | 3 | 22/4 | 11/6 |
| 5 | 0 | 11/4 | 32/6 | 5 | 32/4 | 22/6 | 4 | 31/5 | 12/6 |

Darin gibt die erste Spalte die am Ausgang 3 des Zählers 2 auftretende Zählerstellung an, die gleichzeitig die Adresse der einzelne Steuerspeicher 16, 26 und 36 ist. Die nächste Spalte gibt den Inhalt des Steuerspeichers 16 an, der die auf der Verbindung 17 gelieferten Adressen zum Auslesen des Datenspeichers 12 darstellt. Die darauf folgende Spalte gibt die durchgeschaltete Verbindung an, angegeben mit der Nummer der Eingangsleitung und der Nummer des Kanals und nach dem Schrägstrich die Nummer des Rahmens. Dabei wird ausgegangen von dem in der Figur angegebenen Inhalt der Datenspeicher 12, 22 und 32 zu einem bestimmten Zeitpunkt, nämlich am Ende eines Überrahmens mit drei Rahmen, auf die sich die Zählung der Rahmennummern bezieht. Auf der rechten Seite der dritten Spalte mit den geschalteten Verbindungen sind die Rahmennummern jedoch von dem dargestellten Augenblick ausgehend weitergezählt mit 4, 5 und 6. Die untereinander stehenden Zeilen stellen gewissermaßen eine Zeitachse dar.

In entsprechender Weise stellt die darauf folgende vierte Spalte den Inhalt des Steuerspeichers 26 an, d.h. die Folge der Adressen, die über die Verbindung 27 beim Auslesen des Datenspeichers 22 angesteuert werden. Die nächste Spalte gibt die über den Datenspeicher 22 geschalteten Verbindungen in der gleichen Weise wie die dritte Spalte an. Entsprechendes gilt auch für die darauf folgende sechste Spalte, die den Inhalt des Steuerspeichers 36 für das Adressieren des Datenspeichers 32 beim Auslesen angibt, und die letzte Spalte zeigt die über diesen Datenspeicher 32 geschalteten Verbindungen.

Mit Beginn des vierten Rahmens nach der in der Figur dargestellten Situation, bevor also die neuen Worte der Eingangsleitungen, d.h. der jeweils ersten Kanäle dieses vierten Rahmens, in die Datenspeicher 12, 22, 32 eingeschrieben werden, ist also am Ausgang 3 des Zählers 2 die Adresse 0 vorhanden, und die entsprechenden Steuerspeicher 16, 26 und 36 werden davon angesteuert. Dadurch wird also der Datenspeicher 12 an der Adresse 3 ausgelesen, und dieses ausgelesene Wort, das von der zweiten Eingangsleitung aus dem zweiten Kanal des zweiten Rahmens stammt, wird auf der ersten Ausgangsleitung 91 im ersten Kanal des vierten Rahmens abgegeben. Dieses Wort wird also mit einer Verzögerung von zwei Rahmen weniger einem Kanal von der zweiten Eingangsleitung zur ersten Ausgangsleitung übertragen.

Der Steuerspeicher 26 liest zu diesem Zeitpunkt aus der Adresse 1 des Datenspeichers 22 das Wort aus, das von der ersten Eingangsleitung 61 aus dem zweiten Kanal des zweiten Rahmens kommt, und überträgt dieses Wort auf die dritte Ausgangsleitung 93 in den ersten Kanal des Rahmens 4. Hier beträgt die Verzögerung bei der Übertragung dieses Wortes von der Eingangsleitung zur Ausgangsleitung ebenfalls zwei Rahmendauern weniger einen Kanal.

Der Steuerspeicher 36 liest aus der Adresse 2 des Datenspeichers 32 das Wort, das von der zweiten Eingangsleitung aus dem ersten Kanal im ersten Rahmen gekommen ist, und dieses Wort wird auf der zweiten Ausgangsleitung 92 im ersten Kanal des vierten Rahmens abgegeben. Bei diesem Wort beträgt die Verzögerung der Durchschaltung von der Eingangsleitung zur Ausgangsleitung drei vollständige Rahmendauern.

6

Nachdem die Datenspeicher 12, 22 und 32 in der angegebenen Weise gleichzeitig ausgelesen sind, werden an den durch die Steuerzähler 14, 24 und 34 bestimmten Adressen, die durch die Pfeile in der Figur angedeutet sind, die Worte der Eingangsleitungen aus dem ersten Kanal im vierten Rahmen eingeschrieben. Der Inhalt der Datenspeicher hat sich nun also gegenüber der Darstellung bezüglich der Rahmennummern verändert. Es sei darauf hingewiesen, daß bei dem Datenspeicher 32 an der gleichen Adresse 2, aus der gerade ausgelesen worden ist, unmittelbar wieder eingeschrieben wird. Im beschriebenen Beispiel tritt dies zwar nur an einer Adresse auf, jedoch kann dies verbindungsbedingt an jeder Adresse geschehen, so daß die Datenspeicher 12, 22 und 32 so beschaffen sein müssen, daß sie bei bitweiser Übertragung der Worte der Eingangsleitungen auf die Ausgangsleitungen innerhalb einer Bitperiode ausgelesen und auch an derselben Adresse wieder eingeschrieben werden können, wobei diese letztere Reihenfolge auch umgekehrt werden könnte. Bei einer bitweisen Durchschaltung müssen im übrigen noch die einzelnen Bits der Worte in den Datenspeichern 12, 22 und 32 einzeln nacheinander adressiert werden, so daß tatsächlich das Auslesen und Einschreiben je Wort bitverschachtelt erfolgt.

Nach dem Auslesen und Einschreiben je eines vollständigen Wortes erscheint der nächste Wortimpuls WP, wodurch am Ausgang 3 des Zählers 2 die Adresse 1 für die Steuerspeicher 16, 26 und 36 erscheint. Damit adressiert der Steuerspeicher 16 die Adresse 4 des Datenspeichers 12, wodurch das Wort des ersten Kanals der dritten Eingangsleitung des dritten Rahmens auf die erste Ausgangsleitung im zweiten Kanal des vierten Rahmens übertragen wird. Die Verzögerung dieses Wortes beträgt also nur die Dauer eines Rahmens zuzüglich eines Kanals, was in diesem Beispiel allerdings die gleiche Verzögerung wie für das vorhergehende übertragene Wort ergibt. Entsprechend erfolgt das Auslesen der anderen Datenspeicher auch bei den folgenden, am Ausgang 3 des Zählers 2 auftretenden Adressen, wobei zu beachten ist, daß nach jeweils zwei Adressen nicht nur die Umschalter 64, 65 und 66, sondern auch die Umschalter 84, 85 und 86 jeweils eine Stellung weiterschalten. Ferner ist bei den weiteren Adressen am Ausgang 3 des Zählers 2 zu berücksichtigen, daß aus den Datenspeichern 12, 22 und 32 nicht immer die Wörter, die in der Figur angegeben sind, ausgelesen werden, sondern bei den letzten Adressen werden die nach dem dargestellten Augenblick eingeschriebenen Wörter, die also aus dem Rahmen 4 bzw. 5 stammen, ausgelesen. In der Tabelle ist bei diesen Wörtern die Rahmennummer durch Unterstreichung hervorgehoben.

Insgesamt ist aus der Tabelle zu erkennen, daß die Wörter jeweils eines bestimmten Kanals einer bestimmten Eingangsleitung immer auf derselben Ausgangsleitung im selben Kanal abgegeben werden, und zwar stets in derselben Folge der Rahmen. Damit ist also gezeigt, daß jeder Kanal jeder Eingangsleitung auf jeden Kanal jeder Ausgangsleitung vermittelt werden kann, wobei keine Blockierungen möglich sind. Dafür ist es notwendig, daß die einzelnen Steuerspeicher die zugehörigen Datenspeicher jeweils um einen Rahmen versetzt in gleicher Adressenfolge adressieren, wie aus der Tabelle hervorgeht, denn die Adressenfolge für den Datenspeicher 22 ist gegenüber der Adressenfolge des Datenspeichers 12 um zwei Plätze, d.h. um eine Rahmenlänge nach unten verschoben, wobei die unteren beiden Adressen in der Adressenfolge für den Datenspeicher 12 oben an die Adressenfolge für den Datenspeicher 22 angefügt sind. Das gleiche gilt für die Verschiebung der Adressenfolge des Datenspeichers 32 gegenüber der Adressenfolge des Datenspeichers 22 und bei dieser Betrachtungsweise auch für die Verschiebung der Adressenfolge des Datenspeichers 32 gegenüber der Adressenfolge des Datenspeichers 12, so daß sich eine geschlossene zyklische Verschiebung ergibt. Dabei ist davon ausgegangen, daß die Steuerspeicher 16, 26 und 36 alle vom Ausgang 3 des Zählers 2 adressiert werden.

Eine andere Möglichkeit besteht darin, jeden Steuerspeicher von dem zugehörigen Steuerzähler zu adressieren, nämlich den Steuerspeicher 16 vom Steuerzähler 14, den Steuerspeicher 26 vom Steuerzähler 24 und den Steuerspeicher 36 vom Steuerzähler 34. In diesem Falle haben alle Steuerspeicher den gleichen Inhalt bezogen auf ihre Adresse, und die Verschiebung der Adressierung der Datenspeicher beim Auslesen erfolgt durch die versetzte Adressierung der Steuerspeicher, da die Steuerzähler 14, 24 und 34, wie früher beschrieben, versetzt gegeneinander zählen. Dies kann vorteilhaft für das Einschreiben der Verbindungssteuerinformation in die Steuerspeicher von einem nicht dargestellten Vermittlungsrechner aus sein, da dieser dann alle Steuerspeicher an der gleichen Adresse einschreiben kann. Die Folge der Übertragung der Wörter bei der Vermittlung ändert sich dabei nicht.

Bisher wurde von einer bitweisen Vermittlung der Wörter ausgegangen. Bei Leitungen mit sehr hohen Bitgeschwindigkeiten können die möglichen Schaltgeschwindigkeiten der Umschalter 64 bis 66 und 84 bis 88 sowie die Arbeitsgeschwindigkeit der Datenspeicher und Steuerspeicher überschritten werden. In diesem Falle ist es dann günstiger, die auf den externen Eingangsleitungen bitseriell eintreffenden Wörter der einzelnen Kanäle parallel umzusetzen und bitparallel in der dargestellten und beschriebenen Anordnung durchzuschalten. Dadurch müßten dann die Umschalter 64 bis 66 und 84 bis 86 entsprechend mehrfach vorhanden sein, nämlich je Bit einmal, ebenso müßten dann die Eingansleitungen 61 bis 63, die Zwischenleitungen 71 bis 73 und 81 bis 83 sowie die Ausgangsleitungen 91 bis 93 tatsächlich aus einer Anzahl paralleler Leitungen entsprechend der Bitzahl je Wort bestehen. Für die Kapazität der Datenspeicher 12, 22 und 32 sowie der Steuerspeicher 16, 26 und 36 ist dagegen keine Änderung erforderlich, da in jedem Falle alle Datenspeicher zusammen die Worte aller Eingangsleitungen aus einer Anzahl Rahmen gleich der Anzahl Eingangsleitungen gleichzeitig speichern müssen.

Die im vorstehend beschriebenen Ausführungsbeispiel angegebene Organisation bezüglich der Folge der durch die Umschalter hergestellten Verbindungen und damit die Folge der in den Datenspeichern gespeicherten Werte der einzelnen Eingangsleitungen kann auch abgewandelt werden, insbesondere dadurch, daß die Eingangsleitungen 61 bis 63 in anderer Weise an die einzelnen Umschalter 64 bis 66 angeschlossen sind. Die Umschalter 64 bis 66 können auch umgekehrt angeordnet sein, d.h. jede Eingangsleitung 61 bis 63 führt auf einen Umschalter. Wesentlich ist, daß jeder Datenspeicher stets die gleiche Informationsmenge aller Eingangsleitungen enthält und alle Datenspeicher 12, 22 und 32 die Informationen der Eingangsleitungen untereinander in der gleichen Folge auch bezüglich der Kanäle enthalten, damit alle Steuerspeicher ebenfalls die gleiche Folge der Adresse enthalten, ggf. gegeneinander verschoben, so daß diese Adressen für den Aufbau der Verbindungen einheitlich in die Steuerspeicher eingeschrieben werden können. Außerdem müssen die von den ausgangsseitigen Umschaltern hergestellten Verbindungen denen der eingangsseitigen Umschalter angepaßt sein, d.h. es müssen jeweils die gleichen Kombinationen von Verbindungen schaltbar sein.

Die beschriebene Anordnung verhält sich wie ein einstufiges Koppelfeld ohne innere Blockierung. Der erforderliche Aufwand für die Umschalter ist begrenzt, da sie sich durch übliche integrierte Standardbausteine, insbesondere in Form sogenannter Multiplexer bzw. Demultiplexer, realisieren lassen, während für die Datenspeicher und Steuerspeicher ebenfalls gängige integrierte Speicherschaltungen verwendet werden können. Durch das einstufige Verhalten ist keine Wegesuche erforderlich, und jede Verbindung wird durch nur einen einzigen Wert, nämlich eine in allen Steuerspeichern gleiche Adresse für die Datenspeicher, bestimmt.

## Patentansprüche

1. Vermittlungsanlage zur rechnergesteuerten Vermittlung von digitalen zeitverschachtelten, in zyklisch wiederholten Rahmen auf einer Anzahl Eingangsleitungen (61 - 63) eintreffender Daten nach einer gleichen Anzahl Ausgangsleitungen (91 - 93) über ein Koppelfeld, das
   - eingangsseitig erste zyklisch parallel betätigte Umschalter (64 - 66), die die Eingangsdaten der Eingangsleitungen rahmenweise zyklisch über eine gleiche Anzahl Eingangs-Zwischenleitungen (71 - 73) verteilen,
   - eine an die Eingangs-Zwischenleitungen angeschlossene mittlere Stufe mit Datenspeichern (12, 22, 32), in der die zu vermittelnden Datenwege bestimmt werden und die die Daten auf einer der Anzahl Eingangs-Zwischenleitungen gleichen Anzahl Ausgangs-Zwischenleitungen abgibt, und
   - ausgangsseitig zweite zyklisch parallel betätigte Umschalter (84 - 86) aufweist, die die Daten auf den Ausgangs-Zwischenleitungen rahmenweise zyklisch über die Ausgangsleitungen verteilen, auf denen die vermittelnten Daten erscheinen,
   dadurch gekennzeichnet, daß zu jeder Kombination einer Eingangsleitung (61, 62, 63) mit einer Eingangs-Zwischenleitung (71, 72, 73), die sich aus den Stellungen der eingangsseitigen Umschalter (64, 65, 66) ergibt, eine gleiche Kombination von Ausgangs-Zwischenleitungen (81, 82, 83) mit Ausgangsleitungen (91,92, 93) durch die ausgangsseitigen Umschalter (84, 85, 86) vorhanden ist, wobei die Folge der Kombinationen jeweils gleich ist, daß in der mittleren Stufe je Eingangs-Zwischenleitung (71, 72, 73) ein wahlfrei adressierter Datenspeicher (12, 22, 32) vorgesehen ist, der eine Kapazität für die Daten aller Eingangsleitungen (61, 62, 63) während jeweils eines Rahmens aufweist und der die Daten je eines anderen Rahmens jeder eingehenden Leitung (61, 62, 63) aufnimmt, und daß eine Adressiervorrichtung (2, 4, 14, 16, 24, 26, 34, 36) vorgesehen ist, die alle Datenspeicher (12, 22, 32) in gleicher Adressenfolge, jedoch von Datenspeicher zu Datenspeicher um einen Rahmen versetzt, zyklisch wiederholt zum verbindungsabhängigen Schreiben und/oder Lesen ansteuert.

2. Vermittlungsanlage nach Anspruch 1,
   dadurch gekennzeichnet, daß in einer Stellung der eingangsseitigen und ausgangsseitigen Umschalter (64, 65, 66; 84, 85, 86) die Eingangsleitungen (61, 62, 63) mit den Eingangs-Zwischenleitungen (71, 72, 73) und gleichzeitig die Ausgangs-Zwischenleitungen (81, 82, 83) mit den Ausgangsleitungen (91, 92, 93) jeweils in umgekehrter Reihenfolge miteinander verbunden sind und die Verbindungen in den anderen Stellungen sich durch parallele Verschiebung der Verbindungen in der einen Stellung ergeben.

3.  Vermittlungsanlage nach Anspruch 1 oder 2,
    dadurch gekennzeichnet, daß die Adressiervorrichtung einen eigenen Steuerspeicher (16, 26, 36) je Datenspeicher (12, 22, 32) umfaßt und alle Steuerspeicher (16, 26, 36) die gleiche Folge von Datenspeicheradressen enthalten.

4.  Vermittlungsanlage nach Anspruch 1, 2 oder 3,
    dadurch gekennzeichnet, daß von den beiden Folgen der Datenspeicheradressen zum Einschreiben und Auslesen eine dieser Folgen unabhängig von den durchzuschaltenden Verbindungen die natürliche Adressenfolge der Datenspeicher (12, 22, 32) ist und nur die andere Folge durch die durchzuschaltende Verbindung bestimmt ist.

5.  Vermittlungsanlage nach Anspruch 4,
    dadurch gekennzeichnet, daß jedem Datenspeicher (12, 22, 32) ein Steuerzähler (14, 24, 34) zugeordnet ist, der eine der beiden Adressenfolgen liefert, und daß die Steuerzähler (14, 24, 34) um jeweils eine Rahmenlänge gegeneinander versetzt zählen.

6.  Vermittlungsanlage nach einem der Ansprüche 1 bis 5,
    dadurch gekennzeichnet, daß alle Steuerspeicher (16, 26, 36) gemeinsam von einem Adressengenerator (2) gesteuert sind und die gleiche Folge von Datenspeicheradressen, jeweils um einen Rahmen versetzt, enthalten.

7.  Vermittlungsanlage nach einem der Ansprüche 1 bis 5,
    dadurch gekennzeichnet, daß jeder Steuerspeicher (16, 26, 36) von dem zugehörigen Steuerzähler (15, 25, 35) adressiert wird und alle Steuerspeicher die gleiche Folge von Datenspeicheradressen an denselben Steuerspeicheradressen enthalten.

**Claims**

1.  A switching exchange for the computer-controlled switching of digital time-interleaved data incoming in cyclically repeated frames on a number of input lines (61 - 63) to an equal number of output lines (91 - 93) by means of a switching matrix, which exchange comprises
    -   at the input end first cyclic change-over switches (64 - 66) operated in parallel, which cyclically distribute the input line data in frames over an identical number of input-intermediate lines (71 - 73),
    -   a central stage connected to the input-intermediate lines and including data memories (12, 22, 32), in which the data paths to be switched are determined and which applies the data to a number of output-intermediate lines equal to the number of input-intermediate lines,
    -   at the output end, second cyclic change-over switches (84 - 86) operated in parallel, which cyclically distribute the output-intermediate line data in frames over the output lines on which the transmitted data appear,
    characterized in that for each combination of an input line (61, 62, 63) and an input-intermediate line (71, 72, 73) provided by the positions of the change-over switches (64, 65, 66) at the input end, a similar combination of an output-intermediate line (81, 82, 83) and an output line (91, 92, 93) is provided by the change-over switches (84, 85, 86) at the output end, the sequence of the combinations always being the same, that for each input-intermediate line (71, 72, 73) a randomly addressable data memory (12, 22, 32) which has a capacity to store the data of all the input lines (61, 62, 63) during each frame and which stores the data of each one of further frames of each incoming line (61, 62, 63) is available in the centre stage, and that an addressing arrangement (2,4, 14, 16, 24, 26, 34, 36) is available which cyclically recurrently drives all the data memories (12, 22, 32) in the same address sequence but shifted from one data memory to the next by one frame, so as to allow connection-dependent write and/or read operations being performed.

2.  A switching exchange as claimed in Claim 1, characterized in that in one position of the change-over switches (64, 65, 66; 84, 85, 86) at the input and output ends the input lines (61, 62, 63) are connected to the inputintermediate lines (71, 72 73) and, simultaneously, the output-intermediate lines (81, 82, 83) to the output lines (91, 92, 93) always in reverse order, and in that the connections in the other switch positions are obtained by means of a parallel shift of the connections in the first-mentioned position.

3. A switching exchange as claimed in Claim 1 or 2, characterized in that the addressing arrangement includes a control memory (16, 26, 36) for each data memory (12, 22, 23) and in that all the control memories (16, 26, 26) contain identical sequences of data memory addresses.

4. A switching exchange as claimed in Claim 1, 2 or 3, characterized in that from the two sequences of data memory addresses for writing and reading, one of these sequences is the natural address sequence of the data memories (12, 22, 32) independent of the connections to be switched through, and only the other sequence is determined by the connection to be switched through.

5. A switching exchange as claimed in Claim 4, characterized in that a control counter (14, 24, 34) which produces one of the two address sequences is assigned to each data memory (12, 22, 32), and in that the control counters (14, 24, 34) always count shifted by one frame length relative to each other.

6. A switching exchange as claimed in one of the Claims 1 to 5, characterized in that all the control memories (6, 26, 36) are jointly controlled by one address generator (2) and contain the same sequences of data memory addresses, always shifted by one frame.

7. A switching exchange as claimed in one of the Claims 1 to 5, characterized in that each control memory (16, 26, 36) is addressed by the associated control counter (15, 25, 35) and all the control memories contain the same sequences of data memory addresses at the same control memory addresses.

## Revendications

1. Installation de commutation pour la commutation commandée par ordinateur de données numériques imbriquées dans le temps arrivant dans des trames à répétition cyclique sur un certain nombre de lignes d'entrée (61-63) vers un même nombre de lignes de sortie (91-93) par l'intermédiaire d'un champ de couplage qui comporte
   - du côté d'entrée, des premiers commutateurs (64-66) actionnés en parallèle de manière cyclique, qui répartissent les données d'entrée des lignes d'entrée par trame cycliquement sur un même nombre de lignes intermédiaires d'entrée (71-73),
   - un étage médian connecté aux lignes intermédiaires d'entrée et comportant des mémoires de données (12, 22, 32) dans lesquelles sont déterminées les voies de données à commuter, qui fournit les données sur un nombre de lignes intermédiaires de sortie égal au nombre de lignes intermédiaires d'entrée, et
   - du côté de sortie, des seconds commutateurs (84-86) actionnés en parallèle de manière cyclique, qui répartissent les données des lignes intermédiaires de sortie par trame cycliquement sur les lignes de sortie sur lesquelles apparaissent les données commutées,
   caractérisée en ce que, pour chaque combinaison d'une ligne d'entrée (61, 62, 63) et d'une ligne intermédiaire d'entrée (71, 72, 73) qui est établie par les positions des commutateurs (64, 65, 66) du côté d'entrée, il existe une même combinaison de lignes intermédiaires de sortie (81, 82, 83) et de lignes de sortie (91, 92, 93) établie par les commutateurs (84, 85, 86) du côté de sortie, la succession des combinaisons étant chaque fois la même, que dans l'étage média, pour chaque ligne intermédiaire d'entrée (71, 72, 73), il est prévu une mémoire de données (12, 22, 32) à adressage aléatoire qui présente une capacité pour les données de toutes les lignes d'entrée (61, 62, 63) pendant chaque fois une trame et qui accepte les données de chaque fois une autre trame de chaque ligne d'entrée (61, 62, 63) et un dispositif d'adressage (2, 4, 14, 16, 24, 26, 34, 36) est prévu, qui active toutes les mémoires de données (12, 22, 32) dans la même séquence d'adresses, mais avec un décalage d'une trame d'une mémoire de données à mémoire de données, et ce, avec une répétition cyclique pour l'enregistrement et/ou l'extraction en fonction de la liaison.

2. Installation de commutation suivant la revendication 1, caractérisée en ce que, dans une des positions des commutateurs du côté d'entrée et du côté de sortie (64, 65, 66; 84, 85, 86), les lignes d'entrée (61, 62, 63) sont connectées aux lignes intermédiaires d'entrée (71, 72, 73) et en même temps les lignes intermédiaires de sortie (81, 82, 83) aux lignes de sortie (91, 92, 93) chaque fois dans l'ordre de succession inverse et les liaisons dans les autres positions sont obtenues par un déplacement parallèle des liaisons de ladite première position.

**3.** Installation de commutation suivant la revendication 1 ou 2, caractérisée en ce que le dispositif d'adressage comporte une mémoire de commande (16, 26, 36) propre pour chaque mémoire de données (12, 22, 32) et toutes les mémoires de commande (16, 26, 36) contiennent la même séquence d'adresses de mémoire de données.

**4.** Installation de commutation suivant la revendication 1, 2 ou 3, caractérisée en ce que parmi les deux séquences d'adresses de mémoire de données pour l'inscription et la lecture, l'une de ces séquences est, indépendamment des liaisons à établir par interconnexion, la séquence d'adresses naturelle des mémoires de données (12, 22, 32) et que seule l'autre séquence est déterminée par la liaison à établir par interconnexion.

**5.** Installation de commutation suivant la revendication 4, caractérisée en ce qu'un compteur de commande (14, 24, 34) est associé à chaque mémoire de données pour fournir l'une des deux séquences d'adresses et les compteurs de commande (14, 24, 34) comptent avec un décalage mutuel de chaque fois une longueur de trame.

**6.** Installation de commutation suivant l'une quelconque des revendications 1 à 5, caractérisée en ce que toutes les mémoires de commande (16, 26, 36) sont commandées en commun par un générateur d'adresses (2) et obtiennent la même séquence d'adresses de mémoire de données, mais chaque fois décalées d'une trame.

**7.** Installation de commutation suivant l'une quelconque des revendications 1 à 5, caractérisée en ce que chaque mémoire de commande (16, 26, 36) est adressée par le compteur de commande (15, 25, 35) associé et toutes les mémoires de commande contiennent la même séquence d'adresses de mémoire de données aux mêmes adresses de mémoire de commande.